# EUROPEAN PATENT APPLICATION

(11) **EP 4 625 657 A1**
(43) Date of publication of application: **01.10.2025**
(21) Application number: 24219013.0
(22) Date of filing: 11.12.2024
(51) Int. Cl.: H01M 50/242, H01M 50/284, H01M 50/507, H01M 50/24, H01M 50/271, H01M 50/289, H01M 50/291, H01M 50/293

(54) **BATTERY PACK AND ELECTRICAL APPARATUS**

(30) Priority: 27.03.2024 CN 202420615533 U; 20.05.2024 WO PCT/CN2024/094152
(71) Applicant: Eve Energy Co. Ltd., Huizhou, Guangdong 516000 (CN)
(72) Inventor: Zhang, Yuhong, Huizhou, Guangdong, 516000 (CN)
(74) Representative: Petraz, Gilberto Luigi

(57) **Abstract**

Disclosed is a battery pack, including a cell contact system, CCS, assembly (1); a battery box (2), in which the CCS assembly (1) is mounted and fixed in the battery box (2); and a sealant component (3), in which the sealant component (3) is provided between the battery box (2) and the CCS assembly (1), and the sealant component (3) is extended along a peripheral direction of the CCS assembly (1) to seal an assembly clearance between the CCS assembly (1) and the battery box (2).

## Description

### TECHNICAL FIELD

The present disclosure relates to the field of batteries and, particularly, to a battery pack and an electrical apparatus.

### BACKGROUND

Currently, the sealing design of the battery pack of the prior art mainly consists of a sealing groove in the lower box body of the battery box and a sealing rib on the upper box cover of the battery box, so that the sealing rib and the sealing groove cooperate to form a seal to ensure the sealing of the battery pack when the upper box cover is closed with the lower box body.

### SUMMARY

The sealing rib in the sealing structure takes up a certain amount of space, i.e., this sealing structure takes up the internal space of the battery box, which does not meet the requirements of the recent battery design that demands a compact battery pack structure.

As a first aspect, provided in the present disclosure is a battery pack, including:
a cell contact system, CCS, assembly;
a battery box, in which the CCS assembly is mounted and fixed in the battery box; and
a sealant component, in which the sealant component is provided between the battery box and the CCS assembly, and the sealant component is extended along a peripheral direction of the CCS assembly to seal an assembly clearance between the CCS assembly and the battery box.

As a second aspect, provided in the present disclosure is an electrical apparatus, including the battery pack mentioned above.

In the battery pack of the present disclosure, the sealant component is cleverly configured between the battery box and the CCS assembly, which effectively utilizes the space of the assembly clearance between the battery pack and the CCS assembly, improves the space utilization rate of the battery box, omits the additional configuration of the space for mounting sealing ribs on the battery box, so as to address the problem that the sealing structure in the battery pack of the prior art occupies much space, which not only achieves a compact assembly and space-saving effect, but is also conducive to the highly integrated design of the battery pack.

### BRIEF DESCRIPTION OF THE DRAWINGS

Fig. 1 is a structural diagram illustrating an exploded view of the battery pack according to the present disclosure;
Fig. 2 is a schematic partially enlarged diagram of Fig. 1 at A.
Fig. 3 is a structural assembly diagram of a battery pack in the present disclosure;
Fig. 4 is a schematic diagram in a top view of a battery pack according to the present disclosure;
Fig. 5 is a schematic sectional diagram of Fig. 4 at B-B;
Fig. 6 is a schematic partially enlarged diagram of Fig. 5 at C.

Labels: 1 CCS assembly; 11 plastic support; 12 sealing groove structure; 121 first groove wall; 122 second groove wall; 13 conductive connecting bar; 14 insulation isolating member; 15 communicating opening; 16 detachable buckle structure; 17 busbar positioning groove; 18 BMS element; 2 battery box; 21 lower box body; 22 upper box cover; 23 limit protrusion; 24 battery box inner chamber; 25 positioning groove structure; 3 sealant component; 4 cell set; 41 cell; 42 busbar; 5 foam buffering member; 6 encapsulating adhesive; 61 first encapsulating part; 62 second encapsulating part; 63 third encapsulating part.

### DETAILED DESCRIPTION

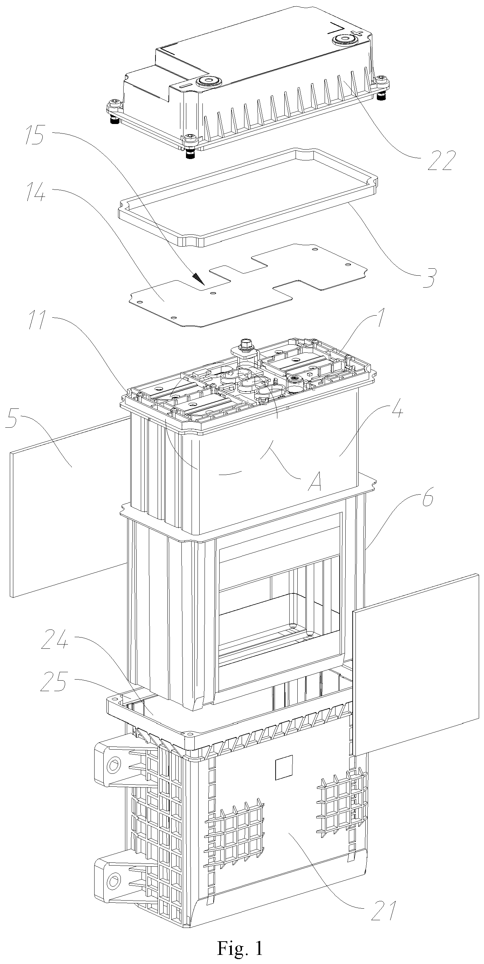

Referring to Figs. 1-5 for details, disclosed in the present disclosure is a battery pack, including a CCS (cell contact system) assembly 1, a battery box 2, a cell set 4, and a sealant component 3. The CCS assembly 1 and the cell set 4 are fixedly mounted in the battery box 2, in which the battery box 2 includes a lower box body 21 and an upper box cover 22 detachably connected to the lower box body 21. In some implementations, the detachable connection may be a threaded connection, a snap-fitted connection, or a combination of the threaded connection and the snap-fitted connection, so as to enable the upper box cover 22 to cover and close on the lower box body 21, thereby well protecting the CCS assembly 1 and the cell set 4 from external touches and shocks.

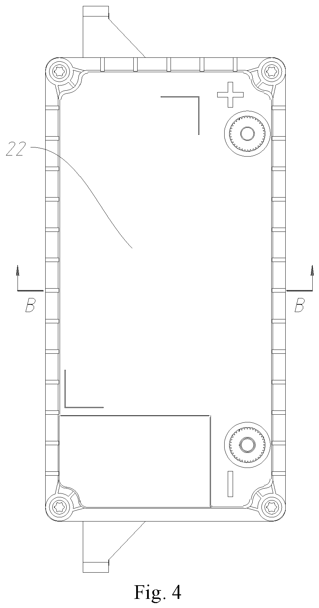

As shown in Figs. 1 and 4, reinforcing ribs are provided on outer sidewalls of the lower box body 21 and/or the upper box cover 22 of the battery box 2. The structure of the reinforcing ribs may well increase the structural strength of the battery box 2, allowing the battery box 2 to withstand greater stress when subjected to external loads to prevent deformation, fracture or any other forms of failure of the battery box 2.

In some implementations, referring to Figs. 1-2 for details, the cell set 5 is electrically connected to the CCS assembly 1. The cell set 4 includes a plurality of cells 41, the plurality cells 41 are connected in series and in parallel through a busbar 42, so as to ensure the battery pack has a relatively large electric capacity, which improves the long-lasting life of the battery pack.

It should be noted that, in some implementations, the cells 41 are square cells. A side of the cell 41 having the largest area is defined as a cell major surface of the cell 41, each cell 41 has two cell major surfaces, and the two cell major surfaces are disposed opposite each other. A side of the cell 41 provided with electrodes (positive, negative) is further defined as the electrode top surface of the cell 41, and a side of the cell 41 opposite the electrode top surface of the cell 41 is the battery bottom surface of the cell 41. The cell major surfaces of two adjacent cells 41 are disposed opposite to each other, and the electrodes of each cell 41 are positioned on the same side of the cell set 4, so that the electrode top surfaces of a plurality of cells 41 are spliced to form an electrode external surface of the cell set 4, i.e., the electrode external surface is the side of the cell set 4 provided with electrodes.

As the core solution of the present implementation, please refer to Figs. 1-5 for details. The sealant component 3 is provided between the battery box 2 and the CCS assembly 1, and the sealant component 3 is extended along a peripheral direction of the CCS assembly 1 to seal an assembly clearance between the CCS assembly 1 and the battery box 2.

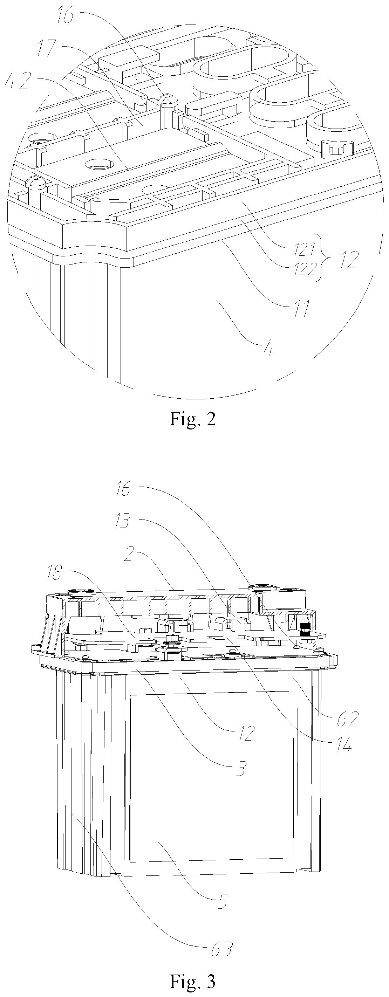

During assembly, the lower box body 21 and the upper box cover 22 are disassembled, the cell set 4 is first placed in the battery box inner chamber 24 of the lower box body 21, and then the CCS assembly 1 is mounted to the cell set 4. In this case, there is an assembly clearance between inner sidewalls of the lower box body 21 and the sidewalls of the CCS assembly 1. Then, the sealant component 3 is assembled to the CCS assembly 1 to seal the assembly clearance between the CCS assembly 1 and the battery box 2, so that the CCS assembly 1, the sealant component 3, and the lower box body 21 form a relatively sealed lower chamber, so as to allow the cell set 4 to be disposed in the relatively sealed lower chamber. Finally, as shown in Fig. 3, when closing the upper box cover 22 to the lower box body 21, the upper box cover 22 presses against the top of the sealant component 3. In such an arrangement, the sealant component 3 may seal the assembly clearance between the lower box body 21 and the upper box cover 22. Also, the CCS assembly 1, the sealant component 3, and the upper box cover 22 form a relatively sealed upper chamber, and the CCS assembly 1 is disposed in the relatively sealed battery box inner chamber 24.

It should be noted that the assembly of the battery pack is intended to be used only as a reference to facilitate an understanding of the core solutions of the present disclosure and is not limited to such assembly.

It should also be noted that, in order to facilitate the mounting and positioning of the cell set 4 in the battery box inner chamber 24, convex rib structures may be formed at the bottom and peripheral sides of the battery box inner chamber 24, and the convex rib structures are utilized to constrain the cell set 4 so as to achieve the mounting and positioning of the cell set 4.

In some implementations, referring to Figs. 1, 2, 4, and 5 for details, the plastic support 11 of the CCS assembly 1 is provided with a sealing groove structure 12, and the sealing groove structure 12 is extended along a peripheral direction of the plastic support 11. Specifically, the sealing groove structure 12 is provided with a first groove wall 121 along a height direction of the cells 41 and a second groove wall 121 perpendicular to the first groove wall 121, in which the height direction of the cells 41 is a direction perpendicular to the battery bottom surface.

In such an arrangement, the inner sidewalls of the lower box body 21, the bottom surface of the upper box cover 22, the first groove wall 121 and the second groove wall 122 of the sealing groove structure 12 form a sealed space when the plastic support 11 of the CCS assembly 1 is fixedly mounted in the lower chamber of the lower box body 21. The sealant component 3 is embedded into the sealing structure, so as to well achieve the sealing of the assembly clearance between the lower box body 21 and the upper box cover 22, and between the CCS assembly 1 and the battery box 2, which is simple in structure and provides higher integration.

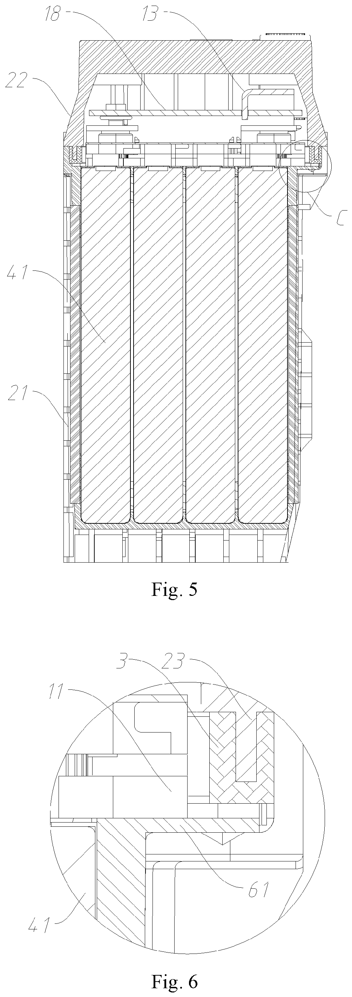

In some implementations, referring to Fig. 6 for details, the sealant component 3 is configured with a limit groove, the upper box cover 22 is provided with a limit protrusion 23 configured to insert into the limit groove, and the limit groove is extended along a peripheral direction of the CCS assembly 1. When the upper box cover 22 is closed to the lower box body 21, the limit protrusion 23 is embedded in the limit groove, ensuring a more compact assembly between the sealant component 3 and the battery box 2, also improving the sealing of the battery pack.

It should be noted that, in order to improve the assembly efficiency, the aforementioned plastic support 11 may be provided with busbar positioning grooves 17, the number of the busbar positioning groove 17 may be identical to that of the busbars 42, and each busbar positioning groove 17 are provided corresponding to each busbar 42. A bottom of each basbar positioning groove 17 is configured with a connecting opening, so that the busbar 42 may be electrically connected to the electrodes of the cell set 4 below the plastic support 11 when the busbars are assembled to the corresponding busbar positioning grooves 17. In such an arrangement, under the restraint of the busbar positioning grooves 17, the busbars 42 may be quickly positioned during assembly, which avoids the risk of inadvertent contact of busbars 42 during subsequent assembly or use.

In some implementations, an inner sidewall of the lower box body 21 is provided with a positioning groove structure 25, the positioning groove structure 25, the upper box cover 22, and sidewalls of the plastic support 11 form a sealed space, and the sealant component 3 is embedded in the sealed space.

Alternatively, instead of the two methods of embedfing and fixing the sealant component 3, the inventors also provide another fixing method, in which the sealant component 3 is directly clamped between inner side walls of the lower box body 21 and sidewalls of the plastic support 11, which utilizes friction between the sealant component 3 and the inner sidewalls of the lower box body 21, as well as friction between the sealant component 3 and the sidewalls of the plastic support 11. In such an arrangement, under the action of the sealant component 3, an interference fit is formed between the upper box cover 22 and the plastic support 11.

In some implementations, referring to Figs. 1 and 3 for details, the battery pack includes foam buffering member 5 provided between the battery box 2 and the cell set 4. In some implementations, the cell major surfaces of the cells 41 in the cell set 4 proximal to the sidewalls of the battery box 2 are abutted against a side of the foam buffering member 5, an opposite side of the foam buffering member 5 is abutted against the inner sidewalls of the lower box body 21 of the battery box 2.

In such an arrangement, the foam buffering member 5 has good elasticity, insulation, light weight, and thin volume, which not only ensures good insulation between the cells 41 proximal to the sidewalls of the battery box 2 and the battery box 2, but also improves the safety and stability of the battery pack. Also, the foam buffering member 5 may well absorb the total amount of expansion deformation generated along a first direction of a plurality of cells 41 during the charging and discharging state, in which the first direction is a direction perpendicular to the cell major surfaces of the cells 41, so as to avoid the risk of extrusion damage to the cells 41 and the sidewalls of the battery box 2 during the charging and discharging state.

In some implementations, referring to Fig. 6 for details, the battery pack further includes an encapsulating adhesive 6. That is, a thermoset polymer insulating material is filled into the battery box 2 with an encapsulating process after placing the cell set 4 in the lower box body 21. In some implementations, the encapsulating adhesive 6 includes a first encapsulating part 61, and the first encapsulating part 61 is provided between the CCS assembly 1 and the battery box 2. In some implementations, the thermoset polymer insulating material is filled between the plastic support 11 of the CCS assembly 1 and the lower box body 21 of the battery box 2. The material is cured to bond and fix the plastic support 11, and the first encapsulating part 61 is formed. The first encapsulating part 61 is extended along a peripheral direction of the plastic support 11, which ensures the assembly stability of the CCS assembly 1, and also further ensures the sealing between the CCS assembly 1 and the battery box 2.

The unexpected effect is that the cooperation between the first encapsulating part 61, the sealing component 3, and the plastic support 11 of the CCS assembly 1 achieves a double sealing effect to ensure a good sealing of the battery pack.

It should be noted that, a top surface of the first encapsulating part 61 is aligned with the electrode external surface of the cell set 4, which well ensures a more compact assembly of the overall battery pack, further saves the assembly space, and also ensures more homogeneous forces applied on the CCS assembly 1 after assembly.

In some implementations, referring to Figs. 3 and 5 for details, the encapsulating adhesive 6 further includes a second encapsulating part 62 integrally formed with the first encapsulating part 61, the second encapsulating part 62 is provided betweent the battery box 2 and the cell set 4. In some implementations, the thermoset polymer insulating material is filled between the lower box body 21 of the battery box 2 and the cells 41 of the cell set 4. The second encapsulating part 62 is extended toward the foam buffering member 5, and may optionally be extended to a top of the foam buffering member 5. As shown in Fig. 3, alternatively, a portion of the second encapsulating part 62 is extended to a top of the foam buffering part 5, and another portion of the second encapsulating part 62 is extended along a depth direction of the battery inner chamber 24 to the bottom of the battery inner chamber 24.

In such an arrangement, under the action of the second encapsulating part 62, the thermoset polymer insulating material is cured to bond and fix the cell set 4/ the cells 41. Also, the material also bonds and fixes the foam buffering member 5, so as to achieve a further stable mounting of the cell set 4 and the foam buffering member 5. Additionally, the cooperation between the second encapsulating part 62 and the foam buffering member 5 further ensures the insulation between the cell set 4 and the battery box 2, which improves the use safety of the battery pack.

Furthermore, referring to Fig. 3 for details, the encapsulating adhesive 6 further includes a third encapsulating part 63, the third encapsulating part 63 is provided between the battery box 2 and the cell set 4. In some implementations, the thermoset polymer insulating material is filled between the lower box body 21 of the battery box 2 and the cells 41 of the cell set 4, and the thermoset polymer insulating material is extended along the depth direction of the battery inner chamber 24 to the bottom of the battery inner chamber 24. The thermoset polymer insulating material is cured to bond the cells 41 and formed the third encapsulating part 63. In such an arrangement, the third encapsulating part 63 and the foam buffering part 5 are positioned on two adjacent lateral surfaces of the cell set 4 respectively. That is, the third encapsulating part 63 is cooperated with the second encapsulating part 62 to encapsulate the peripheral side of the cell set 4, so that a good insulation is formed between the peripheral side of the cell set 4 and the lower box body 21, and the stable bonding and fixing are achieved.

It should be noted that, referring to Figs. 1-3, and 5 for details, the CCS assembly 1 further includes a BMS (battery management system) element 18. The BMS element 18 belongs to a relatively sophisticated prior art in the field of batteries, which is capable of intelligently managing and maintaining the cells 41 of the cell set 4, and monitoring the state of the cells 41 so as to prevent the risk of overcharging and overdischarging of the cells 41, thereby achieving the prolongation of the service life of the cells 41. The BMS element 18 includes a management module, a control module, a display module, a wireless communication module, and a collecting module for collecting the status information of the cells 41 in the cell set 4.

In some implementations, the BMS element 18 is provided on a top of the plastic support 11. The BMS element 18 may be fixedly connected to the upper box cover 22 of the battery box 2 or may optionally be fixedly connected to the plastic support 11. Further, the BMS element 18 is electrically connected to the cell set 4 through the conductive connecting bar 13.

In order to ensure the electrical insulation between the BMS element 18 and the cell set 4, in some implementations, referring to Figs. 1-3, and 5 for details, an insulation isolating member 14 is configured between the BMS element 18 and the cell set 4, in which the insulation isolating member 14 is configured with a communicating opening 15. The communicating opening 15 herein may be an opening structure, or may optionally be a through-hole. The conductive connecting bar 13 passes through the communicating opening 15 to be connected to the BMS element 18. That is, an end of the conductive connecting bar 13 is fixedly connected to the cell set 4, and an opposite end of the conductive connecting bar 13 passes through the communicating opening 15 of the insulation isolating member 14 to be connected to the BMS element 18, and the insulation isolating member 14 is fixedly connected to the plastic support 11.

In some implementations, referring to Figs. 2 and 3, the plastic support 11 is configured with at least one detachable buckle structure 16, and the detachable buckle structure 16 is provided with a first buckle part and a second buckle part disposed opposite each other, in which the first buckle part and the second buckle part may be deformed when subjected to forces. Specifically, a deformation space is configured between the first buckle part and the second buckle part, so that the first buckle part and the second buckle part may be bent toward the deformation space when subjected to an external force until the first and second buckle parts are inserted into and pass through the mounting hole of the insulation isolating member 14. Then, the first and second buckle parts may deform to recover and to be snap-fitted to the insulation isolating member 14 when an external force is withdrawn.

In such an arrangement, the detachable buckle structure 16 may achieve a quick assembly of the insulation isolating member 14, which is simple in structure. Also, it avoids the risk of loosening of bolts or screws during long-term use, and ensures the stability of the insulation isolating member 14 during long-term use.

Additionally, based on the above-described structure of the battery pack and its connection relationship, disclosed by the inventor is also an electrical apparatus including the battery pack as described above. The electrical apparatus herein may optionally be a vehicle, such as an electric car and a battery car, or a processing tool, such as an electric drill and an electric screwdriver.

## Claims

1. A battery pack, comprising:
a cell contact system, CCS, assembly (1);
a battery box (2), wherein the CCS assembly (1) is mounted and fixed in the battery box; and
a sealant component (3), wherein the sealant component (3) is provided between the battery box (2) and the CCS assembly (1), and the sealant component (3) is extended along a peripheral direction of the CCS assembly (1) to seal an assembly clearance between the CCS assembly (1) and the battery box (2).

2. The battery pack according to claim 1, wherein the battery box (2) comprises a lower box body (21) and an upper box cover (22) detachably connected to the lower box body (21), the sealant component (3) is restricted between the lower box body (21) and a plastic support (11) of the CCS assembly (1).

3. The battery pack according to claim 2, wherein the plastic support (11) of the CCS assembly (1) is provided with a sealing groove structure (12), the sealing groove structure (12) is extended along a peripheral direction of the plastic support (11), the lower box body (21), the upper box cover (22), and the sealing groove structure (12) form a sealed space, and the sealant component (3) is embedded in the sealed space.

4. The battery pack according to claim 2, wherein an inner sidewall of the lower box body (21) is provided with a positioning groove structure (25), the positioning groove structure (25), the upper box cover (22), and sidewalls of the plastic support (11) form a sealed space, and the sealant component (3) is embedded in the sealed space.

5. The battery pack according to claim 2, wherein the sealant component (3) is clamped between inner side walls of the lower box body (21) and sidewalls of the plastic support (11).

6. The battery pack according to claim 2, wherein the sealant component (3) is configured with a limit groove, the upper box cover (22) is provided with a limit protrusion (23) configured to insert into the limit groove, the limit groove is extended along a peripheral direction of the CCS assembly (1), and the limit protrusion (23) is embedded in the limit groove when the upper box cover (22) is closed to the lower box body (21).

7. The battery pack according to any one of claims 1-6, further comprising a cell set (4) and an encapsulating adhesive (6), a first encapsulating part (61) of the encapsulating adhesive (6) is provided between the CCS assembly (1) and the battery box (2), a top surface of the first encapsulating part (61) is aligned with an electrode external surface of the cell set (4), wherein the electrode external surface is a side where the cell set (4) is provided with electrodes, the cell set (4) is fixedly mounted in an interior of the battery box (2), and the cell set (4) is electrically connected to the CCS assembly (1).

8. The battery pack according to claim 7, further comprising a foam buffering member (5) provided between the battery box (2) and the cell set (4).

9. The battery pack according to claim 8, wherein the encapsulating adhesive (6) further comprises a second encapsulating part (62), the second encapsulating part (62) is provided between the battery box (2) and the cell set (4), the second encapsulating part (62) is extended toward the foam buffering member (5), and the first encapsulating part (61) and the second encapsulating part (62) are integrally formed.

10. The battery pack according to claim 9, wherein the encapsulating adhesive (6) further comprises a third encapsulating part (63), the third encapsulating part (63) is provided between the battery box (2) and the cell set (4), the third encapsulating part (63) and the foam buffering member (5) are positioned on two adjacent lateral surfaces of the cell set (4) respectively, and the third encapsulating part (63) and the first encapsulating part (61) are integrally formed.

11. The battery pack according to claim 7, wherein the cell set (4) includes a plurality of cells (41), the plurality cells (41) are connected in series and in parallel through a busbar (42), the plastic support (11) is provided with busbar positioning grooves (17), and the busbar positioning grooves (17) are configured to position the busbar (42).

12. The battery pack according to claim 7, wherein the CCS assembly (1) further comprises a BMS element (18), the BMS element (18) is electrically connected to the cell set (4) through a conductive connecting bar (13).

13. The battery pack according to claim 12, wherein an insulation isolating member (14) is configured between the BMS element (18) and the cell set (4), the insulation isolating member (14) is configured with a communicating opening (15), an end of the conductive connecting bar (13) is fixedly connected to the cell set (4), and an opposite end of the conductive connecting bar (13) passes through the communicating opening (15) of the insulation isolating member (14) to be connected to the BMS element (18).

14. The battery pack according to claim 13, wherein the plastic support (11) is configured with at least one detachable buckle structure (16), the detachable buckle structure (16) is capable of being inserted into and pass through the mounting hole of the insulation isolating member (14) when subjected to an external force, and the detachable buckle structure (16) is capable of being deformed to recover and to be snap-fitted to the insulation isolating member (14) when an external force is withdrawn.

15. An electrical apparatus, comprising the battery pack as claimed in any one of claims 1-14.
